Europäisches Patentamt

European Patent Office

Office européen des brevets

(11) Publication number: **0 655 317 A1**

# EUROPEAN PATENT APPLICATION

(21) Application number: **94116244.8**

(22) Date of filing: **14.10.94**

(51) Int. Cl.6: **B29C 67/00**

(30) Priority: **03.11.93 US 146855**

(43) Date of publication of application:
**31.05.95 Bulletin 95/22**

(84) Designated Contracting States:
**DE FR GB**

(71) Applicant: **International Business Machines Corporation**
**Old Orchard Road**
**Armonk, N.Y. 10504 (US)**

(72) Inventor: **Ciccolo, Arthur Charles**
**153 Armand Road**
**Ridgefield,**
**Connecticut 06877 (US)**
Inventor: **Kaul, Anil**
**21 Biltom Road**
**White Plains,**
**New York 10607 (US)**
Inventor: **Korein, James U.**
**8 Berry Brook Circle**
**Chapüaqua,**
**New York 10514 (US)**

(74) Representative: **Schäfer, Wolfgang, Dipl.-Ing.**
**IBM Deutschland Informationssysteme**
**GmbH**
**Patentwesen und Urheberrecht**
**D-70548 Stuttgart (DE)**

(54) **Rapid prototyping method for separating a part from a support structure.**

(57) A method that is suitable for use in a rapid prototyping system and comprises separating a part (18) from a support (20) structure. The method comprises the steps of forming and shaping an interface (22) between a part (18) and a support structure (20); and determining the forming and shaping functionalities automatically depending on forces which are acting on a part during construction, so that adhesion between a part (18) and a support structure (20) is reduced and structural integrity for a part is maintained.

FIG. 2

## Background of the Invention

This invention relates to a method which is suitable for separating a support structure from a part which has been developed by a rapid prototyping system.

## Introduction to the Invention

Rapid prototyping systems can provide a capability for building three-dimensional objects or parts directly from computer aided design (CAD) models.

This capability has introduced a significantly enhanced flexibility in current manufacturing processes. For example, manufacturing processes that involve a design, redesign, prototyping or production of three-dimensional models, molds or patterns, may now be efficiently realized in a matter of hours or days, not months, thereby obviating slower, more complex and expensive manual machining techniques.

## Summary of the Invention

Rapid prototyping systems subsume at least seven technologies, including sterolithography, selective laser sintering, ballistics particle manufacturing, photochemical machining, fused deposition, layered object manufacturing and polymerization.

A common feature of these seven technologies is that objects or parts are typically developed in horizontal layers, from the ground up. Moreover, for several of these technologies, for example, stereolithography, a "scaffolding" or support structure capability is advantageously employed concomitantly with the development of a layered part, so that e.g., a part may be supported against the force of gravity as it is being constructed. Again, in the case of fused deposition modeling, in which materials are extruded from a nozzle, a scaffolding or support structure may be advantageously used to resist tensile forces between material and the nozzle.

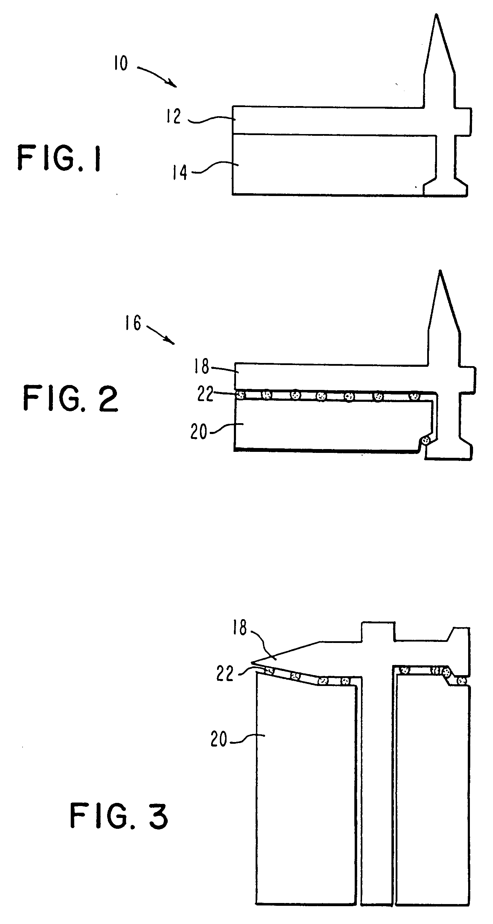

A typical example of a development of a part and associated support structure is shown in FIG. 1. In particular, Fig. 1 shows an assembly 10 comprising a part 12 and a support structure 14 which conforms or mates to an underside of the part 12. We make the following critique of the Fig. 1 assembly 10.

First, when the part 12 is completed, it is necessary to separate the part 12 from the temporal support structure 14. Preferably, this separation action requires a minimal effort, and has no deleterious effect on a surface or fine feature of the part 12.

We have discovered, however, that the separation of the part 12 from the support structure 14 can be labor intensive and require special tools. Moreover, the separation action can result in a derogation of fine features, including a ripping or tearing of the part 12.

We moot that this problem of efficiently and cleanly separating the part 12 from the support structure 14 may be inherent in the assembly 10 design itself. Thus, while we note that it is true that a developing part may have a local minima in the vertical direction, and therefore must be supported during its development against the force of gravity, the FIG. 1 design is "Romanesque" in solution, since it offsets the gravity force but maximizes an adhesion at an interface of the part/support structure. It is a consequence of the maximal adhesion of part/support structure, that can lead to the problem of ripping or tearing etc.

We have now discovered a novel method that addresses and solves this problem. The novel method is suitable for separating a part from a support structure and comprises the steps of:

a) forming and shaping an interface between a part and a support structure;

and

b) determining the forming and shaping functionalities automatically depending on forces which are acting on a part during construction;

so that adhesion between a part and a support structure is reduced and structural integrity for a part is maintained.

The novel method, as defined, can realize significant advantages. At one and the same time, the method can accommodate forces acting during part construction, e.g., gravitational, tensile, and provide appropriate scaffolding support, while reducing adhesion between part and support structure, so that a part can be separated from the support structure with a minimal effort, and with negligible impairment of a part, including its fine features. The novel method, moreover, is suitable for employment with any rapid prototyping technology that requires an attendant scaffolding capability.

## Brief Description of the Drawing

The invention is illustrated in the accompanying drawing, in which:

FIG. 1 shows a cross section of prior art rapid prototyping system comprising a part and its support structure;

FIG. 2 shows a part and its support structure developed in accordance with the method of the present invention;

FIG. 3 shows a second orientation of the FIG. 2 part and support structure;

FIG. 4 shows a CAD model of a part for which the method of the present invention is suitable;

FIG. 5 shows a support comprising a dotted interface developed in accordance with the method of the present invention; and

FIG. 6 comprises a functional block diagram showing a machine implementation of the method of the present invention.

## Detailed Description of the Invention

### General Overview

The novel method of the present invention provides a capability so that a temporary support structure for a part developed by rapid prototyping, may be easily and efficiently removed from the part, and without damage to the part.

In sharp contrast to prior art techniques, of the type exemplified in Figure 1, supra, where a support structure 14 mates precisely with downward pointing regions of the part 12, thus maximizing adhesion between the two, the novel method can reduce adhesion by forming and shaping an interface between a part and a support structure. In particular, the forming and shaping functionalities are automatically determined, preferably by a conventional computer, depending on forces which are acting on a part during its construction.

Accordingly, for purposes of the present invention, we define the concept of a reduction of adhesion between part and support structure, from a referent of maximal adhesion when a support structure of the same composition as a part, is mated precisely or congruently with a part.

A reduction of adhesion can be developed in several ways.

For example, in contrast to the prior art which discloses building a support structure which mates precisely with downward pointing regions of a part, a surface of our support structure may instead be offset by a small distance from the part, and augmented with a geometric structure which can reduce adhesion at an interface between a part and a support structure.

Preferably, an area of contact between a part and a support structure is reduced. For example, adhesion may be reduced by providing an interface between part and support structure, such that a surface area of a topside of an interface is less than that of a topside of a support.

A reduction of adhesion can also be developed by forming and shaping an interface comprising a layer of reduced or varying density, as compared to a part. For example, a part may comprise a thermoplastic, and an interface may comprise a less dense, more porous foam. Alternatively, an interface may comprise a different material from that of a part, for example, wax versus a thermoplastic.

### Definitions

We define the underside of a body. We assume that the -Z axis points in the downward direction. Define the downward pointing unit vector $-\vec{x}$. Let the outward pointing surface normal anywhere on the surface of the body be a unit vector $\vec{n}$. We define the underside of the body as the set of all points on the surface of the body where

$$-\vec{\kappa} \cdot \vec{n} < \epsilon.$$

$\epsilon$ is typically 0.

We define the topside of a body analogously to the underside of a body as the set of all points on the surface of the body where

$$-\vec{\kappa} \cdot \vec{n} > \epsilon.$$

### Preferred Embodiment

Attention is now directed to Fig. 2, which shows a preferred embodiment of the novel method. In particular, FIG. 2 shows an assembly 16 comprising a part 18, a support structure 20, and an interface 22. The interface 22 comprises a layer of dots.

Preferably, a size and shape of the dots is such that they penetrate the underlying support structure 20. This ensures an adherence of the dots to the support structure 20. The dots may be tangent to an undersurface of the part 18, or may penetrate slightly, but preferably the overlap is not so large that the dots adhere to the part 18 instead of the support structure 20.

The dots may comprise a variety of shapes, including, for example, spheres, cones, rectilinear boxes, or frustums.

A spacing and sizing of the dots may be determined by a trade-off between minimizing contact between the part 18 and the support structure 20, and maintaining the ability of the support structure 20 to support the part 18 as it is being built.

Since the supports and the interface region are determined from the underside of the part (as defined above), they are dependent on an orientation of the part 18 with respect to the force of gravity, and will be different for different orientations of the part 18. Two different orientations (rotational) of a part 18 and the resulting supports and interface layers are shown in Figures 2 and 3.

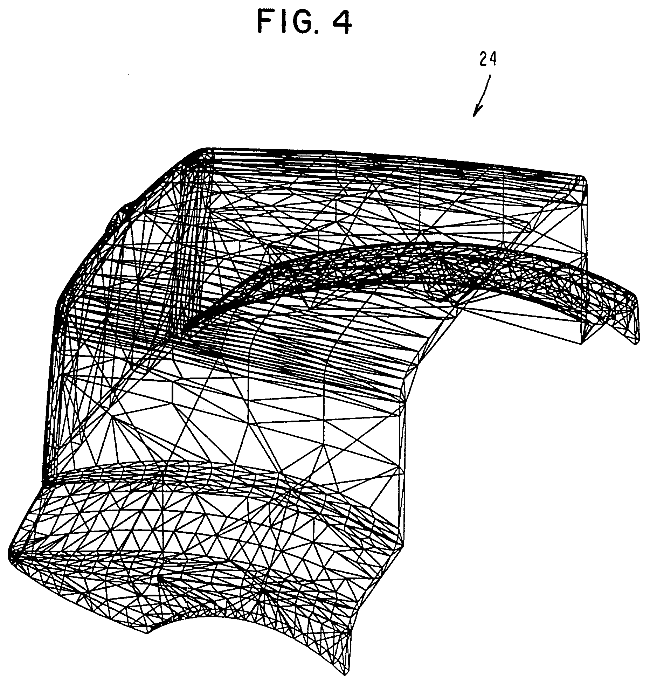

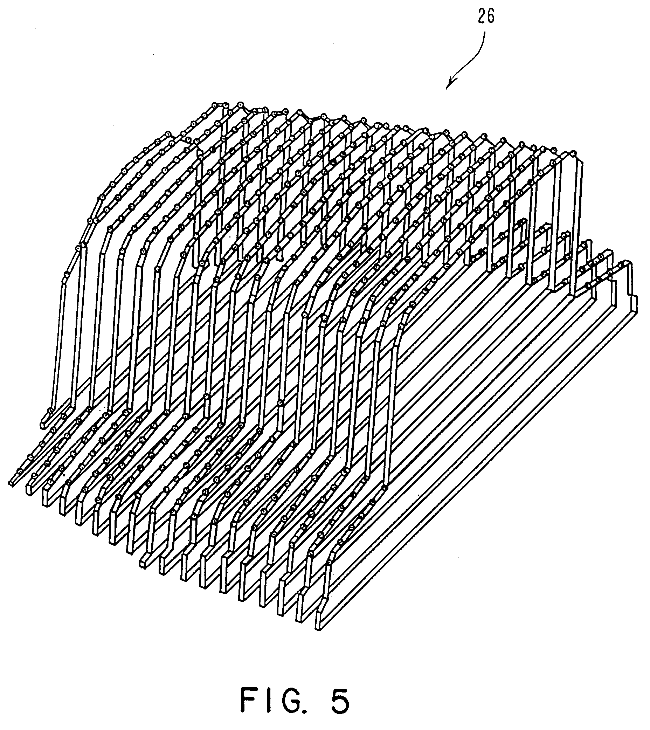

An algorithm for generation of the interface dots in the preferred embodiment is now recited. A CAD model 24 of the part 18 is shown in Figure 4. A CAD model 26 of the supports with interface is shown in Figure 5.

Interface Dot Generation Algorithm

Input:

P, a 3-D CAD model representing the part to be produced.

Δ, a horizontal spacing distance between dots.

$r$, a radius for the dots.

p, the distance the dots will penetrate into the support.

Output:

D, a CAD models representing a collection of dots at the interface layer.

S, a CAD model representing supports for the part to be produced.

1. Determine an underside of the part, as defined above.

2. Construct a vertical slicing plane. Assuming that the part has a minimum X coordinate of 0, the plane is the $X = \Delta/2$ plane.

3. Slice the part with the slicing plane, generating a slice, L. When computing the slice, keep track of which sections of the boundary belong to the underside of the part.

4. For slice L, construct a supporting slice, S, which drops from the underside of the slice L. The support typically terminates at the plane $Z = -(2r - p)$. (In certain cases, the part may double back under the support, so the support will not extend all the way to the ground.)

5. Shrink the support slice S by offsetting it inward by a distance of 2r - p.

6. For the support slice S, construct a set of vertical lines L, in the plane of S, spaced at distance Δ. Intersect each L, with S, to produce several intersection points. From these intersection points, discard any which are at or below ground plane ($Z <\ = 0$). Collect all the intersection points for the support slice S. Let this collection of intersection points be called I.

7. At each intersection point $\vec{I}$ in the collection I, construct a vector $\vec{v}$ in the direction of the outward pointing normal to the support slice S at that point, and with a magnitude of r - p. From this compute a dot center

$$\vec{c} = \vec{i} + \vec{v}.$$

Then construct a dot with center c and radius r. Collect all dots for the support slice and call the collection D.

8. Add this support slice S to a collection of support Slices S for the whole part.

9. Add the dots D for this slice to a collection of dots D for the whole part.

10. Shift the slicing plane by Δ in the X direction.

11. Go back to step 3, and slice again.

Keep slicing until the slicing plane does not intersect the part.

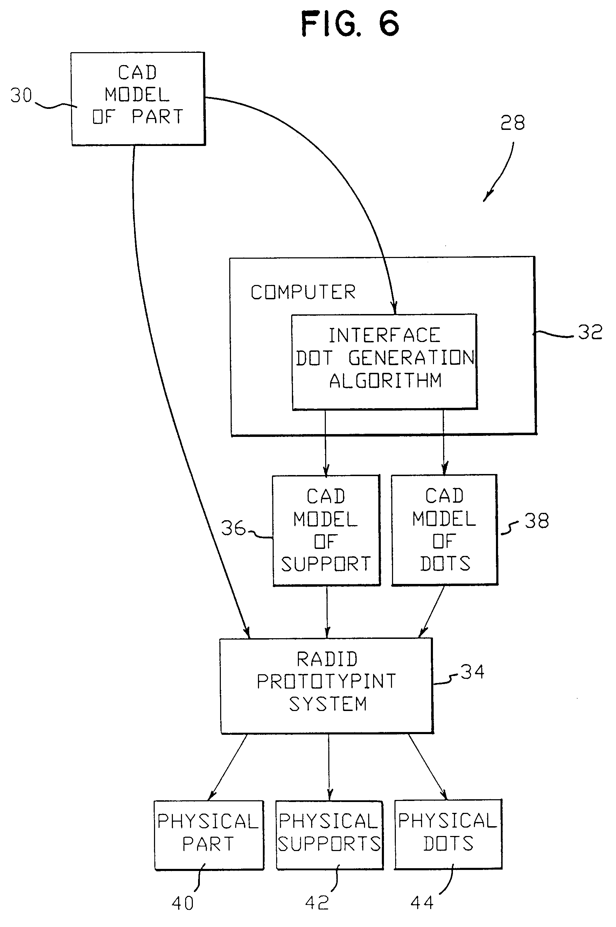

Attention is finally directed to Fig. 6, which comprises an illustrative functional block diagram 28 showing a conventional computer for an automatic implementation of the novel method.

In particular, the FIG. 6 block diagram 28 includes an input block 30 for providing a CAD model of a part. The CAD model is input, in turn, to a computer 32 and a rapid prototyping system 34. The computer 32 is programmed in accordance with the interface dot generating algorithm recited above, to thereby develop a CAD model of a support structure (box 36) and a CAD model of dots (box 38). The CAD models 36, 38 are input to the rapid prototyping system 34, so that in conjunction with the CAD model of a part (box 30), a physical part 40, a physical support 42 and a set of physical dots 44 are constructed.

**Claims**

1. A method that is suitable for separating a part (12) from a support structure (14), the method comprising the steps of:

   a) forming and shaping an interface between a part (12) and a support structure (14); and

   b) determining the forming and shaping functionalities automatically depending on forces which are acting on a part during construction;

   so that adhesion between a part and a support structure is reduced and structural integrity for a part is maintained.

2. A method according to claim 1, wherein step (a) comprises locating material in the interface between a part and a support structure at preselected locations, said preselected locations being determined so that forces acting on a part during its construction are counteracted.

3. A method according to claim 1, wherein step (a) comprises forming and shaping an interface comprising dots spaced in intervals along a support structure.

4. A method according to claim 1, wherein step (a) comprises forming and shaping an interface comprising a layer produced of varying density as compared to a part.

5. A method according to claim 1,
wherein step (a) comprises forming and shaping an interface comprising a material different from that of a part.

6. A method according to claim 1, comprising computer implementing steps (a) and (b).

FIG. 1

10

12

14

FIG. 2

16

18

22

20

FIG. 3

18

22

20

# FIG. 4

26

FIG. 5

# FIG. 6

30 — CAD MODEL OF PART

28

COMPUTER

INTERFACE DOT GENERATION ALGORITHM — 32

36 — CAD MODEL OF SUPPORT

CAD MODEL OF DOTS — 38

RADID PROTOTYPINT SYSTEM — 34

PHYSICAL PART — 40

PHYSICAL SUPPORTS — 42

PHYSICAL DOTS — 44

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 416 124 (SONY)<br>* column 8, line 19 - line 38 *<br>* column 19, line 20 - column 24, line 12 * | 1-6 | B29C67/00 |
| | ----- | | |
| | | | **TECHNICAL FIELDS SEARCHED** (Int.Cl.6)<br><br>B29C |

The present search report has been drawn up for all claims

| Place of search | Date of completion of the search | Examiner |
|---|---|---|
| THE HAGUE | 1 February 1995 | Van Wallene, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)